# EUROPEAN PATENT SPECIFICATION

(11) **EP 2 799 335 B1**
(45) Date of publication and mention of the grant of the patent: **19.07.2017**
(21) Application number: 13382162.9
(22) Date of filing: 30.04.2013
(51) Int. Cl.: B64C 37/00, B64C 39/04

(54) **A modular aircraft**
Modulares Flugzeug
Avion modulaire

(43) Date of publication of application: 05.11.2014
(73) Proprietor: Airbus Operations S.L., 28906 Getafe, Madrid (ES)
(72) Inventor: Martinez Muñoz, José Luis, 28906 Getafe, Madrid (ES); Llamas Sandin, Raúl Carlos, 28906 Getafe, Madrid (ES)
(74) Representative: Elzaburu S.L.P.

(56) References cited:
- FR-A- 1 328 507
- US-A- 5 531 402
- US-A1- 2010 059 623

## Description

### FIELD OF THE INVENTION

The present invention refers to a modular aircraft and, more in particular, to an aircraft formed by separable components.

### BACKGROUND

One of the limiting factors of air transport is the airport congestion due to the concentration of a large number of operations of embarking/disembarking passengers and loading/unloading cargo in a small space and to the complexity of the tasks required to carry out these operations complying with all regulatory requirements and, especially, security.

It is known document FR1328507 that discloses a combination of a lifting airframe and at least one carriage wherein:
- the lifting airframe and the carriage comprise cooperating means for coupling/decoupling the carriage to/from the lifting airframe;
- the lifting airframe comprises lifting surfaces including movable components driven by actuators, and propulsion means for allowing air transportation of said carriage when coupled to the lifting airframe;
- the carriage has a tubular fuselage-like shape with a vertical plane of symmetry;
- the carriage comprises at least a passenger cabin and/or a cargo compartment and landing gears;
- the lifting aircraft or the carriage comprises a cockpit having control means of said lifting surfaces and said propulsion means for performing a flight operation when the carriage is coupled to the lifting airframe.

It is also known document US2010/059623 that discloses an aircraft displaying a fuselage, a wing attached to the fuselage in an upper part and in a middle part along the length of the fuselage, a set of airfoils situated behind the wing and propulsion engines mounted on the wing. The wing, the set of airfoils and the propulsion engines are solidly fastened to an air propulsion unit that is affixed to the fuselage by a connection system permitting the controlled modification in flight of the position of the air propulsion unit relative to the fuselage in the three directions X, Y and Z of the reference aircraft and in rotation around the three directions X, Y and Z. The control of the relative movements of the air propulsion unit and fuselage permits an improved behavior in flight of the airplane and has advantages in the fabrication and operation of the plane.

It is finally known document US5531402 that discloses a primary or backup flight control system for controlling the flight path of an aircraft or spacecraft using wireless transmitters located near the flight deck and positioned within, or on, the outer skin of the fuselage. These transmitters send pilot-generated, wireless, e.g. infra-red, flight control signals to receivers located within, or on, the engines, wings, and tail assembly surfaces. These signals are then directed to their respective engines or moveable flight control surfaces. These wireless control signals are transmitted externally of the fuselage structure and the transmission and receipt of these signals takes place on a single aircraft or spacecraft structure. In case of fuselage damage, e.g., due to structural failure, internal explosions, air-to-air collision, or military combat, which damages the primary flight control system (hydraulic, wire or cable), the present system will remain operative.

Governments try to address these problems by promoting the construction of new airports, increasingly far from cities, or improving the operational capacity of existing airports but, as is easily understandable, it is difficult to achieve the desired airport capacity.

Aircraft manufacturers, for their part, offer models with different capacities to meet demand but the efficiency of the operations of, particularly, embarking/disembarking passengers is strongly conditioned by the architectures of current commercial aircraft. For example, the number of gates for direct embarking/disembarking to/from airplanes is conditioned by the size of aircraft wings.

The present invention is directed to solving that problem.

### SUMMARY OF THE INVENTION

It is an object of the present invention to provide air transportation means capable of being configured with different modules for different flight operations.

It is another object of the present invention to provide air transportation means improving passenger embarking/disembarking and cargo loading/unloading operations.

It is another object of the present invention to provide methods for improving air transportation of passengers and/or cargo.

In one aspect, the above mentioned objects are met by a combination of a lifting airframe and at least one carriage, according to claim 1, comprising cooperating means for coupling/decoupling the carriage to/from the lifting airframe. The carriage has a tubular fuselage-like shape with a vertical plane of symmetry and comprises at least a passenger cabin and/or a cargo compartment and landing gears. The lifting airframe comprises lifting surfaces, including movable components driven by actuators, and propulsion means for allowing carrying out a flight operation of said carriage, when coupled to the lifting airframe, controlled from a cockpit.

The carriage can comprise an independent traction system allowing its autonomous ground transportation when it is decoupled from the lifting airframe, or connection means adaptable to a towing vehicle allowing it to be towed when it is decoupled from the lifting airframe.

Thus, the lifting airframe comprises all the means needed for the air transportation of at least a carriage having a similar configuration and equipment (seats, toilets, galleys, ...) to the fuselages of commercial aircraft. On the other hand, the carriage can be moved on the ground independently from the lifting airframe allowing passenger embarking/disembarking operations or cargo loading/unloading operations in a distant place from the lifting airframe whether inside or outside airports. The combination comprises a lifting airframe and two carriages. The lifting airframe comprises fore and aft lifting surfaces (preferably tandem-wings of a high aspect ratio provided with control surfaces) configured for providing positive lift, two engines (High By-Pass Ratio engines or multi-fan engines) mounted on the aft lifting surface at both sides of the vertical plane of symmetry of the lifting airframe and a central tubular fuselage housing the cockpit.

In another aspect, the above mentioned objects are met by a method of air transportation of passengers and/or cargo, according to claim 7, using one of the above-mentioned combinations wherein at least one carriage is coupled to the lifting airframe in a first airport to perform one or a set of successive flight operations, and it is decoupled from the lifting airframe in a second airport or in the first airport after said one or a set of flight operations have been performed.

In one of said flight operations, the passenger embarking or disembarking and/or the cargo loading or unloading in/from the carriage is done when the carriage is decoupled from the lifting airframe in a location outside or inside the airport.

The method according to this invention has advantages for the airlines of allowing them more flexibility since, on the one hand, it allows passenger embarking/disembarking operations or cargo loading/unloading operations in, for example, the center of cities and, on the other hand, it allows them to hire the lifting airframes from other companies instead of being their owners.

Another significant advantage of the invention is the simplification of the airport structures.

Other desirable features and advantages of the invention will become apparent from the subsequent detailed description of the invention and the appended claims, in relation with the enclosed drawings.

### DESCRIPTION OF THE FIGURES

Figures 1a, 1b and 1c are, respectively, schematic plan views from above of a combination of a lifting airframe and two carriages according to a first embodiment of the invention.
Figures 2a, 2b and 2c are, respectively, schematic plan views from below of the lifting airframe and the carriages of the first embodiment of the invention.
Figure 3 is a schematic perspective view of the combination of a lifting airframe and two carriages according to a first embodiment of the invention.
Figures 4a and 4b are schematic front views of the combination of a lifting airframe and two carriages according to a first embodiment of the invention illustrating two embodiments of the engines.
Figure 5 is a schematic plan view from above of the combination of a lifting airframe and two carriages according to a first embodiment of the invention illustrating the control surfaces of the fore and aft lifting surfaces.
Figure 6 is a partial a schematic perspective view of an embodiment of the combination of a lifting airframe and two carriages according to a first embodiment of the invention illustrating its size.
Figure 7 is a schematic perspective view of the combination of a lifting airframe and one carriage according to a second embodiment of the invention.
Figure 8a and 8b are schematic perspective views of one carriage according to a second embodiment of the invention configured respectively as a cargo compartment and as a passenger cabin.

### DETAILED DESCRIPTION OF THE INVENTION

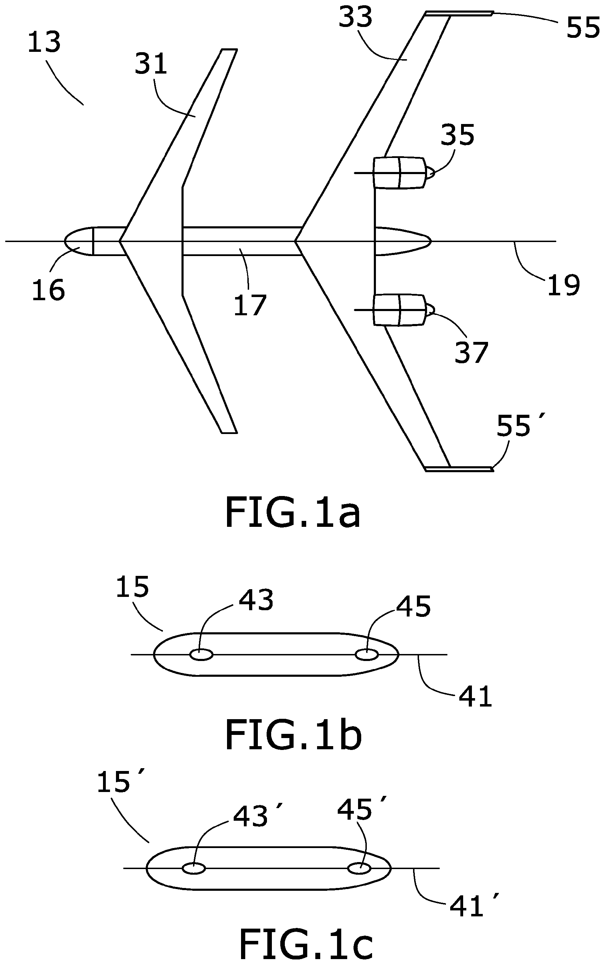

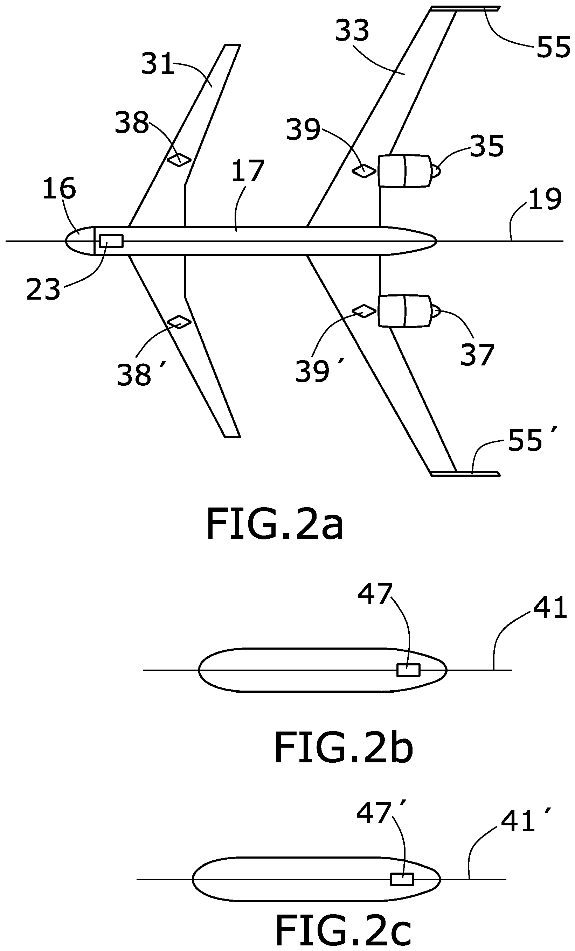

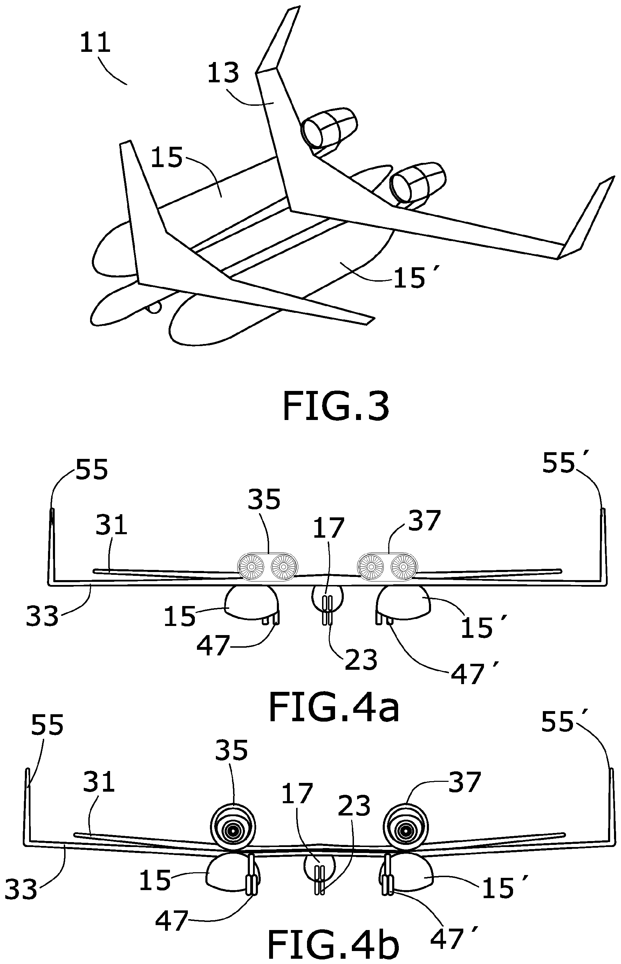

Figures 3 to 6 show an aircraft 11 resulting from a combination according to a first embodiment of the invention of a lifting airframe 13 and two carriages 15, 15' and Figures 1-2 show, separately, the lifting airframe 13 and the carriages 15, 15'.

The lifting airframe 13 and the carriages 15, 15' are thus separate modulus that can be coupled to form an aircraft 11 capable of performing air transportation operations of passenger and/or cargo.

The lifting airframe 13, symmetrical with respect to a vertical plane 19, comprises fore and aft lifting surfaces 31, 33 configured for providing positive lift, a central tubular fuselage 17 and two engines 35, 37 mounted over the aft lifting surface 33.

The lifting airframe 13 is provided with coupling/decoupling means 38 38'; 39, 39' of the carriages 15, 15' placed in the lower skins of the fore and aft lifting surfaces 31,33.

The carriages 15, 15' are provided with coupling/decoupling means 43, 45; 43', 45' to/from the lifting airframe 13 placed on their upper parts.

The carriages 15, 15', having a vertical plane of symmetry 41, 41' can have a variety of configurations for passenger or cargo transportation such as a single configuration as passenger carriages or cargo carriages or a mixed passenger/cargo configuration.

The carriages 15, 15' have a tubular fuselage-like shape with a vertical plane of symmetry and lateral landing gears 47, 47' in the rear part.

This allow the aircraft 11 to have the two carriages 15, 15' configured as passenger carriages, cargo carriages or one passenger carriage 15 and one cargo carriage 15'.

The passenger embarking/disembarking operations and the cargo loading/unloading operations can be carried out in the carriages 15, 15' before/after their coupling/decoupling to the lifting airframe 13 allowing new possibilities of management of air transportation. Of course said operations can also be carried out when the carriages 15, 15' are coupled to the lifting airframe 13.

Said operations can be carried out inside or outside the airport premises when they are decoupled from the lifting airframe 13 using auxiliary means to displace the carriages 15, 15' or with carriages 15, 15' provided with an autonomous traction system for ground transportation.

The main features of the architecture of the aircraft 11, that can be globally defined as a "High Aspect Ratio Tandem-Wing tri-Fuselage Aircraft with High By-Pass Ratio over-wing Engines" are the following:
- The fore and aft lifting surfaces 31, 33 of the lifting airframe 13 are high aspect ratio wings comprising, respectively, flaps 51, 57 for take-off rotation and ailerons 53, 53'; 59, 59' to enable direct lift, pitch and roll control. The aft lifting surface 33 has winglets 55, 55'.
- The lifting airframe 13 comprises two engines 35, 37 mounted over the aft lifting surface 33 at both sides of the plane of symmetry 19 of the aircraft 11. The engines 35, 37 can be single High By-Pass Ratio engines mounted on vertical pylons or multi-fan engines mounted at a close distance from the upper skin of the aft lifting surface 33 for allowing the ingestion of the boundary layer of the carriages 15, 15'.
- The central fuselage 17 of the lifting airframe 13 houses the aircraft cockpit 16 and auxiliary compartments either for cargo, or for aircraft systems such as fuel tanks or batteries. It has a nose landing gear 23. It can have a movable tail cone as an access door to a cargo compartment located in the rear end.
- The shape of the carriages 15, 15' and the central fuselage 17 is adapted to provide a laminar flow from its nose backwards in at least a part of its length.

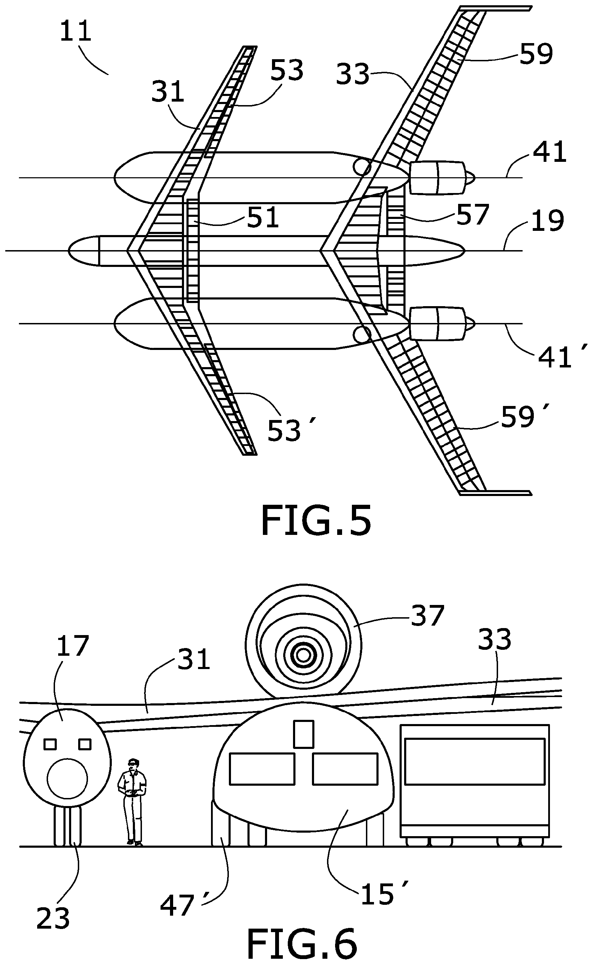

Among others, this architecture has the following advantages:
- Enabling a better adaptation to the needs of air transportation of passenger and cargo allowing carriages 15, 15' specifically designed for different needs.
- Enabling large span wings by providing inertia relief (the weight of the carriages 15, 15' alleviates the bending moment produced by a slender wing).
- Enabling boundary ingestion in the engines 35, 37: the engine intakes can be designed so that the outer boundary layers of carriages 15, 15' are ingested, thereby increasing the propulsive efficiency.
- Having very low sill height (the height of the fuselage floor above the ground), which removes the need for evacuation slides and enables manual loading of the cargo. See Figure 6 showing an embodiment of an aircraft 11 where the height of the central fuselage 17 is compared with the height of a person and the height of the carriage 15' is compared with the height of a conventional bus for passenger transportation in airports.

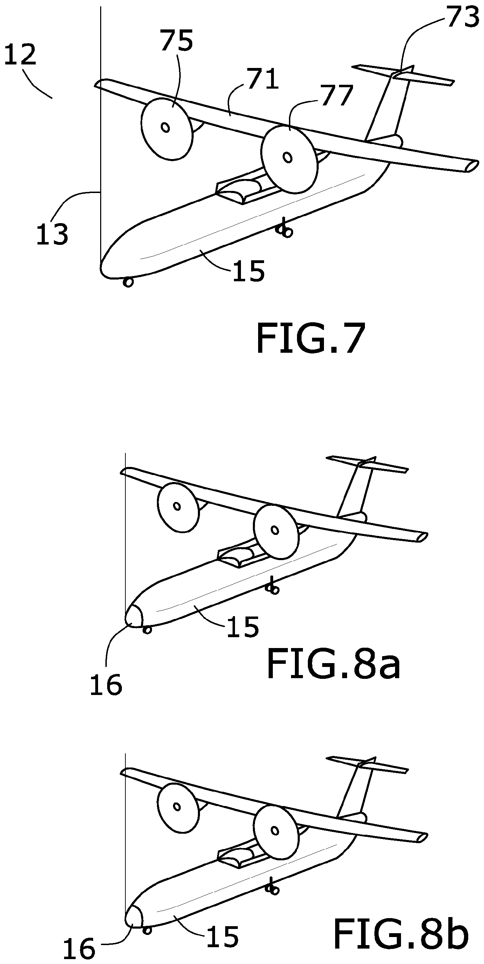

Figure 7 shows the components of an aircraft 12 resulting from a combination of a lifting airframe 13 and a carriage 15 according to a second embodiment of the invention and Figures 8a and 8b show, respectively, an embodiment of the carriage 15 for air transportation of cargo and an embodiment of the carriage 15 for air transportation of passengers.

The lifting airframe 13 comprises, as lifting surfaces, a wing 71 and an empennage 73. The engines 75 and 77 (propeller engines) are mounted on the front of the wing 71.

The carriage 15 can have a variety of configurations for passenger or cargo transportation such as a single configuration as passenger carriages or cargo carriages or a mixed passenger/cargo configuration. In all of them, the carriage also includes the cockpit 16 of the aircraft 12. It is provided with a full set of landing gears.

The coupling/decoupling of the aircraft 12 requires the coupling/decoupling of all of the above-mentioned components including the systems needed to allow its handling. In this respect they can be provided with wired or wireless communication means to control the lifting airframe 13 from the cockpit 16 of the carriage 15. In the first case the carriage wires and the lifting airframe wires are arranged to be connected in a single connection unit.

For a better understanding we will now describe some examples of methods of air transportation of passengers according to the invention using the last combination described.

### Coupling/Decoupling by transport operation

The passenger embarking onto the carriage 15 is done in a station in the city centre. The carriage 15 is moved to the airport by its own means or by being carried by, for example, a train. The carriage 15 is then coupled to a lifting airframe 13 at a special platform where the wing 71 and empennage 73 are connected to it in minutes. The wing 71 has the propulsion system already connected to it and is provided with the required fuel for the flight operation. The wing 71 also has ailerons, flaps, and spoilers as in the actual wings and the required systems to move these control surfaces. The signals to those control surfaces and to the engines 75, 77 can be passed to the cockpit 16 in the carriage 15 by means of simple pug'n'play wire arrangements or by wireless devices (radiofrequency). The wing 71 can be coupled with the carriage 15 in a platform area with the aid of a crane for a high wing configuration or from a ditch for a low wing configuration. The empennage is coupled in a similar way. The decoupling would be performed in a similar manner with passengers onboard and the carriage 15 would be moved to the station of the city centre for passenger disembarking.

The airport can then be reduced to a runway because check in/check out and embarking/disembarking operations take place outside the airport.

### Coupling/Decoupling each day

The coupling/decoupling operations are performed each day without passengers on board to allow the use of a lifting airframe with a passenger carriage to transport passengers during the day and with a cargo carriage to transport cargo during the night.

### Coupling/Decoupling periodically

The coupling/decoupling operations are performed periodically allowing a separate maintenance/upgrading of the lifting airframe and the carriage.

Although the present invention has been described in connection with various embodiments, it will be appreciated from the specification that various combinations of elements, variations or improvements therein may be made, and are within the scope of the invention.

## Claims

1. A combination of a lifting airframe (13) and at least one carriage (15) wherein:
- the lifting airframe (13) and the carriage (15) comprise cooperating means for coupling/decoupling the carriage (15) to/from the lifting airframe (13);
- the lifting airframe (13) comprises lifting surfaces including movable components driven by actuators, and propulsion means for allowing air transportation of said carriage (15) when coupled to the lifting airframe (13);
- the carriage (15) has a tubular fuselage-like shape with a vertical plane of symmetry;
- the carriage (15) comprises at least a passenger cabin and/or a cargo compartment and landing gears;
- the lifting aircraft (13) or the carriage (15) comprises a cockpit (16) having control means of said lifting surfaces and said propulsion means for performing a flight operation when the carriage (15) is coupled to the lifting airframe (13),
**characterised in that** it comprises two carriages (15, 15'), wherein:
- the lifting airframe (13) also comprises a tubular fuselage (17) having a vertical plane of symmetry comprising at least a passenger cabin and/or a cargo compartment and a nose landing gear (23);
- the cockpit (16) is placed in the front part of said tubular fuselage (17);
- the lifting surfaces are fore and aft lifting surfaces (31, 33) configured for providing positive lift;
- the lifting airframe (13) is configured with a vertical plane of symmetry (19) coincident with the plane of symmetry of the tubular fuselage (17);
- the propulsion means comprise two engines (35, 37) mounted over the aft lifting surface (33) at both sides of said vertical plane of symmetry (19);
- the fore and aft lifting surfaces (31, 33) comprise first coupling/decoupling means (38, 38'; 39, 39') of said carriages (15, 15') in their lower skins at both sides of the vertical plane of symmetry (19);
- the two carriages (15, 15') comprise second coupling/decoupling means (43, 45; 43', 45') to/from said lifting surfaces (31, 33) on their upper parts and landing gears (47, 47') in their rear ends.

2. A combination according to claim 1, wherein the carriage (15) also comprises an independent traction system allowing its autonomous ground transportation when it is decoupled from the lifting airframe (13).

3. A combination according to claim 1, wherein the configuration of the carriage (15) comprises connection means adaptable to a towing vehicle allowing it to be towed when it is decoupled from the lifting airframe (13).

4. A combination according to claim 1, wherein:
- said fore and aft lifting surfaces (31, 33) are tandem-wings of a high aspect ratio;
- the fore tandem-wing (31) wing comprises flaps (51) for take-off rotation and ailerons (53, 53') to enable direct lift, pitch and roll control;
- the aft tandem-wing (33) wing comprises winglets (55, 55') acting as lateral stability, flaps (57) for take-off rotation and ailerons (59, 59') to enable direct lift, pitch and roll control.

5. A combination according to any of claims 1-4, wherein said engines (35, 37) are High By-Pass Ratio engines mounted on vertical pylons attached to the aft lifting surface (33).

6. A combination according to any of claims 1-4, wherein said engines (35; 37) are two multi-fan engines mounted at a distance of the upper skin of the aft lifting surface (33) for allowing the ingestion of the boundary layer of said carriages (15, 15').

7. A method of air transportation of passengers and/or cargo using a combination according to any of claims 1-6, wherein at least one carriage (15) is coupled to the lifting airframe (13) in a first airport to perform one or a set of successive flights/flight operations and it is decoupled from the lifting airframe (13) in a second airport or in the first airport after said one or a set of flying missions have been performed.

8. A method according to claim 7, wherein in at least one flight/flight operation, the passenger embarking or disembarking and/or the cargo loading or unloading in/from the carriage (15) is done when the carriage (15) is decoupled from the lifting airframe (13).

9. A method according to claim 8, wherein the passenger embarking or disembarking and/or the cargo loading or unloading in/from the carriage (15) is done in a location outside an airport.

## Patentansprüche

1. Kombination aus einem tragenden Flugwerk (13) und mindestens einem Fahrgestell (15), wobei:
- das tragende Flugwerk (13) und das Fahrgestell (15) zusammenwirkende Mittel zum Koppeln/Entkoppeln des Fahrgestells (15) an das/von dem tragende/n Flugwerk (13) umfassen;
- das tragende Flugwerk (13) Tragflächen umfasst, die bewegliche Bauteile umfassen, die von Aktuatoren angetrieben werden, und Antriebsmittel, um den Lufttransport des Fahrgestells (15) zu ermöglichen, wenn dieser an das Flugwerk (13) gekoppelt ist;
- das Fahrgestell (15) eine röhrenförmige, rumpfartige Form mit einer vertikalen Symmetrieebene aufweist;
- das Fahrgestell (15) mindestens eine Passagierkabine und/oder einen Frachtraum und Fahrwerke umfasst;
- das tragende Flugzeug (13) oder das Fahrgestell (15) ein Cockpit (16) umfasst, das Steuermittel für die Tragflächen und die Antriebsmittel zum Ausführen eines Flugmanövers aufweist, wenn das Fahrgestell (15) an das tragende Flugwerk (13) gekoppelt ist,
- **dadurch gekennzeichnet, dass** sie zwei Fahrgestelle (15, 15') umfasst, wobei:
- das tragende Flugwerk (13) überdies einen röhrenförmigen Rumpf (17) umfasst, der eine vertikale Symmetrieebene aufweist, die mindestens eine Passagierkabine und/oder einen Frachtraum und ein Fahrwerk an der Rumpfspitze (23) umfasst;
- das Cockpit (16) im vorderen Teil des röhrenförmigen Rumpfs (17) angeordnet ist;
- die Tragflächen vordere und hintere Tragflächen (31, 33) sind, die ausgestaltet sind, positiven Auftrieb bereitzustellen;
- das tragende Flugwerk (13) mit einer vertikalen Symmetrieebene (19) ausgestaltet ist, die deckungsgleich ist mit der Symmetrieebene des röhrenförmigen Rumpfs (17);
- die Antriebsmittel zwei Triebwerke (35, 37) umfassen, die über der hinteren Tragfläche (33) an beiden Seiten der vertikalen Symmetrieebene (19) montiert sind;
- die vorderen und hinteren Tragflächen (31, 33) erste Kopplungs-/Entkopplungsmittel (38, 38'; 39, 39') der Fahrgestelle (15, 15') in ihren Außenhäuten an beiden Seiten der vertikalen Symmetrieebene (19) umfassen;
- die beiden Fahrgestelle (15, 15') an ihren oberen Teilen und Fahrwerken (47, 47') an ihren Hecks zweite Kopplungs-/Entkopplungsmittel (43, 45; 43', 45') an/von den Tragflächen (31, 33) umfassen.

2. Kombination nach Anspruch 1, wobei das Fahrgestell (15) überdies ein unabhängiges Antriebssystem umfasst, das dessen autonomen Bodentransport ermöglicht, wenn es von dem tragenden Flugwerk (13) entkoppelt ist.

3. Kombination nach Anspruch 1, wobei die Ausgestaltung des Fahrgestells (15) Verbindungsmittel umfasst, die an ein Schleppfahrzeug anpassbar sind, und wodurch dieser abgeschleppt werden kann, wenn er von dem tragenden Flugwerk (13) entkoppelt ist.

4. Kombination nach Anspruch 1, wobei:
- die vordere und hintere Tragflächen (31, 33) Tandemflügel mit einer hohen Flügelstreckung sind:
- der vordere Flügel der Tandemflügel (31) Klappen (51) zur Startrotation und Querruder (53, 53') zum Befähigen von Direktauftrieb, Flügelsteigung und Rollsteuerung umfasst.
- der hintere Flügel der Tandemflügel (33) Winglets (55, 55'), die als Seitenstabilität wirken, Klappen (57) zur Startrotation und Querruder (59, 59') zum Ermöglichen von Direktauftrieb, Flügelsteigung und Rollsteuerung umfasst.

5. Kombination nach einem der Ansprüche 1 bis 4, wobei die Triebwerke (35, 37) High-Bypass-Ratio-Triebwerke sind.

6. Kombination nach einem der Ansprüche 1 bis 4, wobei die Triebwerke (35, 37) zwei Triebwerke mit mehreren Lüftern sind, die mit einem Abstand zu der oberen Außenhaut der hinteren Tragfläche (33) montiert sind, um die Aufnahme der Grenzfläche der Fahrgestelle (15, 15') zu ermöglichen.

7. Verfahren zum Lufttransport von Passagieren und/oder Fracht unter Verwendung einer Kombination gemäß einem der Ansprüche 1 bis 6, wobei mindestens ein Fahrgestell (15) auf einem ersten Flughafen an das tragende Flugwerk (13) gekoppelt wird, um einen oder einen Satz aufeinanderfolgender Flüge/Flugmanöver auszuführen, und an einem zweiten Flughafen oder an dem ersten Flughafen, nachdem einer oder ein Satz Flugmissionen ausgeführt wurden, von dem tragenden Flugwerk (13) entkoppelt wird.

8. Verfahren nach Anspruch 7, wobei bei mindestens einem Flug/Flugbetrieb, der Passagier an Bord oder von Bord geht und/oder die Fracht in/aus dem Fahrgestell (15) ein- oder ausgeladen wird, wenn das Fahrgestell (15) von dem tragenden Flugwerk entkoppelt ist (13).

9. Verfahren nach Anspruch 8, wobei der Passagier an Bord oder von Bord geht und/oder die Fracht in/aus dem Fahrgestell (15) an einem Ort außerhalb eines Flughafens ein- oder ausgeladen wird.

## Revendications

1. Combinaison d'une cellule portante (13) et d'au moins un chariot (15) dans laquelle :
- la cellule portante (13) et le chariot (15) comprennent des moyens de coopération pour coupler/découpler le chariot (15) à/de la cellule portante (13) ;
- la cellule portante (13) comprend des surfaces portantes incluant des composants mobiles entraînés par des actionneurs, et des moyens de propulsion pour permettre le transport aérien dudit chariot (15) quand il est couplé à la cellule portante (13) ;
- le chariot (15) a une forme de type fuselage tubulaire avec un plan de symétrie vertical ;
- le chariot (15) comprend au moins une cabine passager et/ou un compartiment marchandises et des trains d'atterrissage ;
- la cellule portante (13) ou le chariot (15) comprend un cockpit (16) possédant des moyens de commande desdites surfaces portantes et desdits moyens de propulsion pour effectuer une opération de vol quand le chariot (15) est couplé à la cellule portante (13),
**caractérisée en ce qu'**elle comprend deux chariots (15, 15'), dans laquelle :
- la cellule portante (13) comprend également un fuselage tubulaire (17) ayant un plan de symétrie vertical comprenant au moins une cabine passager et/ou un compartiment marchandises et un train d'atterrissage avant (23) ;
- le cockpit (16) est placé dans la partie avant dudit fuselage tubulaire (17) ;
- les surfaces portantes sont des surfaces portantes avant et arrière (31, 33) configurées pour fournir une portance positive ;
- la cellule portante (13) est configurée avec un plan de symétrie vertical (19) qui coïncide avec le plan de symétrie du fuselage tubulaire (17) ;
- les moyens de propulsion comprennent deux moteurs (35, 37) montés sur la surface portante arrière (33) des deux côtés dudit plan de symétrie vertical (19) ;
- les surfaces portantes avant et arrière (31, 33) comprennent des premiers moyens de couplage/découplage (38, 38' ; 39, 39') desdits chariots (15, 15') dans leurs revêtements inférieurs des deux côtés du plan de symétrie vertical (19) ;
- les deux chariots (15, 15') comprennent des seconds moyens de couplage/découplage (43, 45 ; 43', 45') auxdites/desdites surfaces portantes (31, 33) sur leurs parties supérieures et des trains d'atterrissage (47, 47') dans leurs extrémités arrière.

2. Combinaison selon la revendication 1, dans laquelle le chariot (15) comprend également un système de traction indépendant permettant son transport autonome au sol quand il est découplé de la cellule portante (13).

3. Combinaison selon la revendication 1, dans laquelle la configuration du chariot (15) comprend des moyens de liaison pouvant être adapté à un véhicule de remorquage lui permettant d'être remorqué quand il est découplé de la cellule portante (13).

4. Combinaison selon la revendication 1, dans laquelle :
- lesdites surfaces portantes avant et arrière (31, 33) sont des ailes tandem ayant un allongement élevé ;
- l'aile d'aile tandem avant (31) comprend des volets (51) pour rotation de décollage et des ailerons (53, 53') pour permettre la commande directe de la portance, du tangage et du roulis ;
- l'aile d'aile tandem arrière (33) comprend des ailettes (55, 55') servant de volets de stabilité latérale des volets (57) pour rotation de décollage et des ailerons (59, 59') pour permettre la commande directe de la portance, du tangage et du roulis ;

5. Combinaison selon l'une quelconque des revendications 1-4, dans laquelle lesdits moteurs (35, 37) sont deux moteurs à taux de dilution élevé montés sur des mats verticaux attachés à la surface portante arrière (33).

6. Combinaison selon l'une quelconque des revendications 1-4, dans laquelle lesdits moteurs (35 ; 37) sont des moteurs à multiples soufflantes montés à une distance du revêtement supérieur de la surface portante arrière (33) pour permettre l'absorption de la couche de limite desdits chariots (15, 15').

7. Procédé de transport aérien de passagers et/ou de marchandises utilisant une combinaison selon l'une quelconque des revendications 1-6, dans lequel au moins un chariot (15) est couplé à la cellule portante (13) dans un premier aéroport afin d'effectuer un(e) ou un ensemble de vols/opérations de vol successifs et il est découplé de la cellule portante (13) dans un second aéroport ou dans le premier aéroport après la réalisation de ladite une mission de vol ou d'un ensemble de missions de vol.

8. Procédé selon la revendication 7, dans lequel, lors d'au moins un vol/une opération de vol, l'embarquement ou le débarquement de passager et/ou le chargement ou le déchargement de marchandises dans le/du chariot (15) est effectué quand le chariot (15) est découplé de la cellule portante (13).

9. Procédé selon la revendication 8, dans lequel l'embarquement ou le débarquement de passager et/ou le chargement ou le déchargement de marchandises dans le/du chariot (15) est effectué dans un endroit situé à l'extérieur d'un aéroport.
